# EUROPEAN PATENT SPECIFICATION

(11) **EP 3 287 612 B1**
(45) Date of publication and mention of the grant of the patent: **06.03.2019**
(21) Application number: 16306083.3
(22) Date of filing: 25.08.2016
(51) Int. Cl.: F01K 13/02, F01K 23/10

(54) **HRSG CONTROL FOR OPTIMIZED FRESH AIR OPERATION**
HRSG-STEUERUNG FÜR OPTIMIERTEN FRISCHLUFTBETRIEB
RÉGULATION D'UN GÉNÉRATEUR DE VAPEUR À RÉCUPÉRATION DE CHALEUR POUR OPTIMISATION DE L'ADMISSION D'AIR FRAIS

(43) Date of publication of application: 28.02.2018
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: FONNE, Olivier, 94503 Champigny sur Marne (FR); GREE, Stéphane, 94370 SUCY EN BRIE (FR); MARINUS, Dave, NL-3197 KG Rotterdam-Botlek (NL); SEGRET, Jacques, PARIS 75011 (FR)
(74) Representative: De Vleeschauwer, Natalie Y.L.D.

(56) References cited:
- EP-A1- 1 344 977
- EP-A1- 2 246 532
- EP-A2- 1 903 282

## Description

The present invention relates to cogeneration units and in particular to the fresh air operation of cogeneration units.

Cogeneration units or Cogen units (hereafter also referred to by the abbreviation "CU") are installations which are designed simultaneously to generate both (a) power, in particular electricity, and (b) steam, or heat in the form of steam, by means of fuel combustion, hence the term "cogeneration". Documents EP1903282 A2, EP2246532 A1 and EP1344977 A1 disclose cogeneration units.

In CUs, a gas turbine (hereafter also referred to by the abbreviation "GT") is used to generate electricity. Hot exhaust gas from the GT is used to generate steam in a heat recovery steam generator" (hereafter also referred to by the abbreviation "HRSG").

The GT, the HRSG and the CU as a whole, are designed for optimum energy efficiency in the above-described cogeneration mode of operation.

The steam generated in the cogeneration process can be used:
- as such, to meet the steam demands of downstream installations, and/or
- as a heat source to meet heat requirements of such installations.

In what follows, reference will be made to steam supply, steam demand and steam requirement regardless of whether said steam is used as such or as a heat source.

There is an increased need for CUs to be more flexible as regards electricity production while at all times maintaining the required steam or heat supply to industrial customers regardless of the level of electricity production.

For example, when the electricity market prices are so low as to make electricity generation by the GT of the CU unprofitable, the GT should ideally be stopped. At the same time, the steam demand must continue to be met.

It is known in the art to shut down the HRSG in such a situation and to generate the required steam by means of a separate back-up boiler. This known method presents the disadvantage of requiring the presence of such a back-up boiler on site. In addition, a significant period of time is required for the back-up boiler to reach its operational temperature.

An alternative is to operate only the HRSG of the CU when the GT is down, i.e. to operate the HRSG on its own without the HRSG receiving any exhaust gas from the GT. This operating mode of the CU and of the HRSG is known in the art as fresh air operation (hereafter also referred to by the abbreviation "FAO").

It is pointed out that the term "fresh" in "fresh air operation" does not refer to the temperature of the combustion air introduced into the HRSG but rather to the fact that said air is supplied to the HRSG without first having been used as a combustion oxidant in the GT.

During FAO, the HRSG operates as an autonomous boiler, whereby heat for steam production is generated inside the HRSG by burning fuel with combustion air.

FAO was originally developed as a back-up mode for maintaining the steam production of a CU when the GT is briefly stopped for maintenance or during unscheduled trip or stop. Energy efficiency during FAO was therefore not a major concern.

However, when FAO is used as an alternative operation mode of the CU, in particular at times of low electricity demand or low electricity prices, energy efficiency during FAO of a CU becomes essential.

It is known in the art to limit fuel consumption by adapting the fuel supply to the HRSG in function of the instantaneous steam demand of the downstream steam-consuming installation(s), while maintaining the air supply to the HRSG at a constant level which is sufficiently high to ensure safe Fresh Air Operation of the HRSG at the highest possible steam demand.

From EP-A-1344977, it is known to improve the energy efficiency of the HRSG during FAO by recycling part of the flue gas evacuated from the HRSG back to the inlet of the HRSG together with fresh combustion air. The present invention aims to provide an alternative or additional manner of improving the energy efficiency of a HRSG during FAO of a CU.

In accordance with the present invention, this is achieved by means of a method according to claim 1.

In the present context, the term "instantaneous steam demand" refers to the amount of steam the CU is expected to generate or supply at a given moment in time, as distinguished from the average or nominal steam demand which the CU is expected to meet.

During said FAO of the CU, the fuel is combusted with the air in the HRSG by means of a burner assembly. Said combustion generates heat, which is used to generate steam in a heat exchange assembly of the HRSG downstream of the burner assembly, as well as flue gas, which is evacuated from the HRSG.

The method according to the present invention includes the steps of:
a. receiving an input signal Θi, whereby said input signal Θi corresponds to/reflects the instantaneous steam demand of the steam-consuming installation(s);
b. generating an instantaneous fuel-demand signal Fo as a function of the input signal Θi; and
c. regulating the fuel supply to the HRSG as a function of the fuel-demand signal Fo.

A skilled person is familiar with how a fuel supply to a steam generator can be regulated in function of the energy required in order to meet a given steam demand.

The method according to the invention further includes the steps of:
d. processing a signal Θ from the input signal Θi to an output signal Θo in an open-loop process (as opposed to in a closed-loop process);
e. generating an air-demand signal Ao as a first predetermined function of Θo, i.e. Ao = f1(Θo); and
f. regulating the air supply to the HRSG in accordance with said air-demand signal Ao.

For each value of the processed output signal Θo, predetermined function f1 generates an optimum value for the air-demand signal Ao, as regards steam generation energy efficiency, taking into account the different factors such as oxygen for fuel combustion and gas flow rates in contact with the heat exchange assembly.

With the method according to the present invention, it is possible to operate the CU in FAO to generate steam with high energy efficiency and using the equipment already used during cogeneration, in particular the HRSG of the CU.

The first predetermined function f1 is preferably obtained by experimentally determining the optimum value of the air supply to the HRSG, and thus also of the corresponding optimum air-demand signal Ao, for different levels of the steam demand, i.e. for different levels of steam generation by the HRSG during FAO. In this manner, the air-demand signal Ao is determined for different values of the output signal Θo.

According to a preferred embodiment of the invention, the open-loop process of step d comprises an initial substep of damping the input signal Θi, in particular by means of a dynamic filter. In other words, according to this embodiment, the initial substep of the open-loop process is to generate a signal Θ which corresponds to the damped input signal Θi.

In this manner, it is avoided that the open-loop output signal Θo and the corresponding air-demand signal Ao fluctuate in response to short-lived variations, known as "noise", in the received input signal Θi. Such noise, because of its short duration, neither requires nor justifies changing the air supply to the HRSG. Thus, by damping the input signal Θi a more stable FAO HRSG operation is obtained.

The resulting damped signal Θ may advantageously also be used as the input value for generating the fuel-demand signal Fo, thereby avoiding fluctuations in the fuel supply to the HRSG is response to noise in the input signal Θi.

The HRSG usefully comprises a pressure sensor which detects a pressure Pf in the HRSG upstream of the burner assembly.

In that case, the pressure Pf detected by the pressure sensor is preferably compared with a predetermined minimum pressure Pmin, while the open-loop process of step d comprises a final substep of increasing the signal Θ by means of a PID controller, acting as an override controller, if Pf < Pmin, resulting in an increase in the open-loop output signal Θo.

The HRSG usefully comprises a temperature measuring system which determines a first gas temperature Tg¹ in the HRSG between the burner assembly and the heat exchange assembly. The temperature measuring system may contain a single temperature sensor installed in between the burner assembly and the heat exchange assembly, but preferably comprises at least two temperature sensors installed in between the burner assembly and the heat exchange assembly of the HRSG. When the temperature measuring system comprises two or more such temperature sensors, first temperature Tg¹ is either the average value of the temperatures detected by the individual temperature sensors or, preferably, the highest of the temperatures detected by the individual temperature sensors. The determined first temperature Tg¹ is then advantageously compared with a predetermined maximum temperature Tmax and the open-loop process of step d comprises a final substep of increasing the signal Θ by means of a PID controller, acting as an override controller, if Tg¹ > Tmax. This again results in an increase in the open-loop output signal Θo.

It is also possible and useful to combine the above two options. In that case the HRSG comprises a temperature measuring system which determines a first gas temperature Tg¹ in the HRSG between the burner assembly and the heat exchange assembly and a pressure sensor which detects a pressure Pf upstream of the burner assembly. The determined temperature Tg¹ is compared with a predetermined maximum temperature Tmax and the detected pressure Pf is compared with a predetermined minimum pressure Pmin. The open-loop process of step d comprises a final substep of increasing the signal Θ by means of a PID controller, acting as an override controller, thus also increasing the -open-loop output signal Θo, if Tg¹ > Tmax and/or if Pf < Pmin.

According to a further embodiment of the method of the present invention, the HRSG comprises a temperature measuring system which determines a second gas temperature Tg² in the HRSG between the burner assembly and the heat exchange assembly. This temperature measuring system may contain a single temperature sensor installed in between the burner assembly and the heat exchange assembly, but likewise preferably comprises at least two temperature sensors installed in between the burner assembly and the heat exchange assembly of the HRSG. When the temperature measuring system comprises two or more such temperature sensors, second temperature Tg² is the average value of the temperatures detected by the individual temperature sensors. The determined second temperature Tg² is compared with a predetermined optimum temperature Topt and the open-loop process of step d comprises a substep of increasing the signal Θ when Tg² > Topt and/or of decreasing the signal Θ when Tg² < Topt. Preferably, signal Θ is increased when Tg² > Topt and decreased when Tg² < Topt. When comparing the determined second temperature Tg² with the predetermined optimum temperature Topt, the error margin of determined second temperature Tg² is typically taken into account. The predetermined optimum temperature Topt can be constant or can be a function of the steam demand which the HRSG has to meet. In the latter case, Topt may, for example, be determined experimentally, in particular during the experiments through which the first predetermined function f1 has been obtained. According to one embodiment, during FAO of the HRSG, the open-loop output signal Θo is limited to a predetermined range [Θmin, Θmax], with ΔΘ = Θmax - Θmin. Θmin corresponds to the lowest possible output signal generated by the open-loop process during FAO, and may be 0 (zero). A Θmin value of 0 is preferably used to reflect a zero steam demand on the HRSG by the downstream steam-consuming installation(s). Θmax corresponds to the highest possible output signal generated by the open-loop process during FAO. Θmax may in particular be selected so as to correspond to the value of the open-loop output signal at the highest possible steam demand from the downstream steam-consuming installation(s) which the HRSG may have to meet during FAO.

When the open-loop output signal Θo is limited to a predetermined range [Θmin, Θmax],, it is advantageous in the above substep of step d to increase the signal Θ by a value of not more than ΔΘ/10, without exceeding the maximum value of Θmax, when Tg² > Topt and to decrease the signal Θ by a value of not more than ΔΘ/10 when Tg² < Topt without descending below the minimum value of Θmin.

When the HRSG comprises a temperature measuring system for determining first gas temperature Tg¹ which is compared with Tmax in a final substep of the open-loop process of step d, as described earlier, then the same temperature measuring system can be used to determine second gas temperature Tg² which is compared with Topt. When the same temperature measuring system is used to determine first temperature Tg¹ and second temperature Tg² and the average value of the temperatures detected by the individual temperature sensors is used as Tg¹, then the same determined temperature is used as Tg¹ for the comparison with Tmax and as Tg² for the comparison with Topt.

The open-loop process of step d typically also comprises a bias function, for example immediately downstream of the dynamic filter/damping in the open-loop process (used as an initial substep). Via this bias function, the operator can intervene in the otherwise automatic process, and bias the signal Θ (upwards or downwards).

The fuel supply to the HRSG is typically regulated by regulating the opening of a fuel supply valve upstream of the HRSG, whereby, as indicated above, the fuel supply to the HRSG is regulated in accordance with the fuel-demand signal Fo.

The air supply can be regulated by regulating the opening of a fresh air damper upstream of the HRSG, whereby, as indicated above, the air supply to the HRSG is regulated in accordance with the air-demand signal Ao.

The air supply can also be regulated by regulating the speed of a variable-speed drive fan incorporated in the air supply line upstream of the HRSG in accordance with the air-demand signal Ao.

A combination of the two is also possible.

According to an energetically useful embodiment, the HRSG further comprises a flue gas recycle for recycling flue gas from the HRSG back into the HRSG.

In that case, the method according to the present invention preferably includes the steps of:
g. generating a flue-gas-recycle signal Ro according to a second predetermined function f2 of the open-loop output signal Θo, i.e. Ro = f2(Θo), and
h. regulating the supply of recycled flue gas to the HRSG in accordance with said flue-gas-recycle signal Ro.

Second function f2 generates a value for the flue-gas-recycle signal Ro which, together with the air-demand signal Ao generated by the first function f1, permits optimal steam generation energy efficiency.

Preferably, both the first and the second predetermined functions f1 and f2, are obtained by experimentally determining, during FAO of the HRSG, the combined optimum value of the air supply, and thus also of the air-supply-signal Ao, and optimum value of the flue gas recycle, and thus also of the flue-gas-recycle signal Ro, for different levels of FAO steam generation by the HRSG, and thus also for different values of the open-loop output signal Θo. The principles of the experimental determination have been described here above with respect to the first function f1 only.

It will be appreciated that when the HRSG is equipped with a flue gas recycle so that, during FAO of the HRSG, a combination of fresh air and recycled flue gas is or can be supplied to the HRSG, the combined regulation of the air supply in step f and of the supply of recycled flue gas in step h may be performed by regulating (a) the total combined supply or flow of fresh air and recycled flue gas and (b) the ratio between the individual supplies or flows of fresh air and of recycled flue gas to the HRSG. The invention as described above includes methods applying this manner of regulation.

The supply of recycled flue gas can be regulated by regulating the opening of a flue-gas-recycle damper of the flue gas recycle, whereby, as indicated above, said supply of recycled flue gas to the HRSG is regulated in accordance with said flue-gas-recycle signal Ro.

The supply of recycled flue gas can also be regulated by regulating the speed of a variable-speed drive fan incorporated in the flue gas recycle.

A combination of the two is also possible.

The HRSG may also comprise an oxygen sensor which detects the oxygen concentration Coxf in the flue gas leaving the HRSG. In that case, the method of the invention may advantageously include the further steps of:
i. comparing the detected oxygen concentration Coxf with a flue-gas oxygen target value Cset, and
j. adjusting the air-demand signal Ao and/or the flue-gas-recycle signal Ro, upstream of the respective steps of regulating the air supply and regulating the supply of recycled flue gas, so as to increase the ratio between the supplied air and the recycled flue gas when Coxf < Cset and so as to decrease the ratio between supplied air and recycled flue gas when Coxf > Cset.

Cset may depend on the level of steam generation by the HRSG during FAO. Cset can then be expressed as a function of the damped input signal, of the fuel-demand signal Fo or of the open-loop output signal Θo.

The adjustment of the air-demand signal Ao and/or of the flue-gas-recycle signal Ro in step i is preferably conducted so that the total amount of air and of recycled flue gas supplied to the HRSG, expressed in Nm³/h, remains substantially constant, i.e. the total amount of air and of recycled flue gas supplied to the HRSG after the adjustment in step j is substantially identical with the total amount of air and of recycled flue gas to the HRSG which would have been supplied to the HRSG without the adjustment of the air-demand signal Ao and/or the flue-gas-recycle signal Ro in step j.

In the present context, a gas supply or flow rate, expressed in Nm³/h, is considered to be substantially constant when its variation remains within 2.5% and two values of such a gas supply rate are considered substantially identical when the difference between the two values is not more than 2.5% of the first value.

When the HRSG is further equipped with a fresh air preheater, the method according to the present invention may include the regulation of the temperature to which the fresh air is preheated during FAO in addition to the regulation of the supply of said fresh air to the HRSG. The regulation of the temperature to which the fresh air is preheated is then performed in accordance with a generated air temperature signal Ta, whereby Ta = f3(Θo), f3 being a third predetermined function f3 of the open-loop output signal Θo. As explained earlier with respect to the first and second predetermined functions f1 and f2, the third predetermined function f3 may in particular be determined experimentally, in combination with the first predetermined function f1 and, where applicable, also in combination with the second predetermined function f2.

The present invention and its advantages are hereafter illustrated, reference being made to figures 1 to 6, whereby:
• figure 1 is a schematic representation of a first embodiment of a CU,
• figure 2 is a first schematic representation of the interaction between the process control and the hardware during FAO of the CU of figure 1,
• figure 3 is second schematic representation of the interaction between the process control and the hardware during FAO of the CU of figure 1 showing details of the open-loop process,
• figure 4 is a schematic representation of a second embodiment of a CU,
• figure 5 is a first schematic representation of the interaction between the process control and the hardware during FAO of the CU of figure 4, and
• figure 6 is second schematic representation of the interaction between the process control and the hardware during FAO of the CU of figure 4 showing details of the open-loop process.

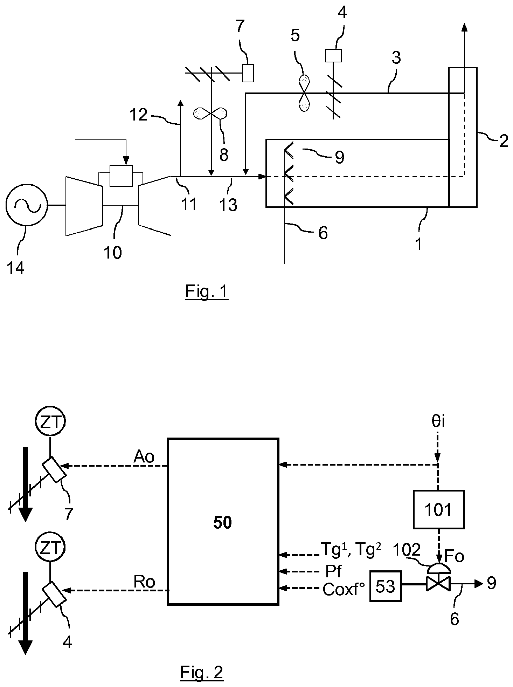

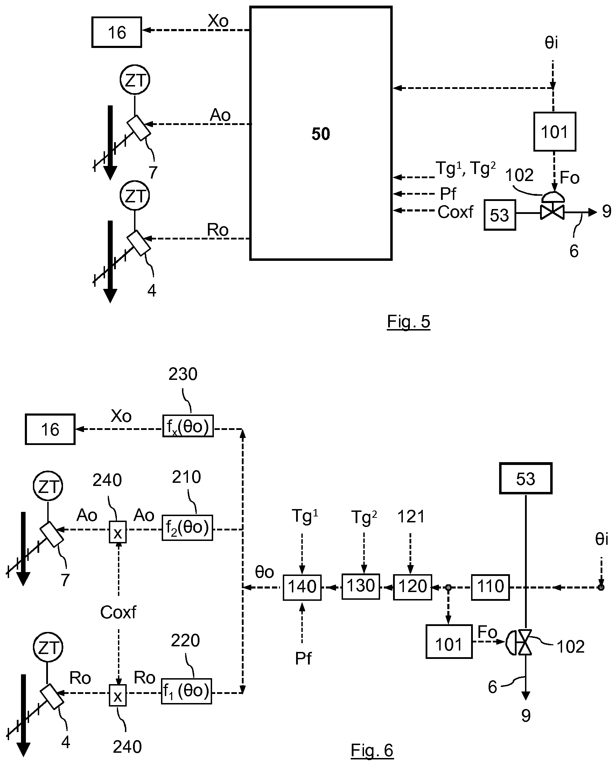

In figures 2 and 5, the entire open-loop process is represented as included in block 50 which receives the input signal Θi and any detected parameters Tg¹, Tg², Pf, Coxf, etc., and in the memory of which predetermined functions f1, f2, and boundary conditions Tmax, Pmin, Θmax, Θmin, etc. are stored.

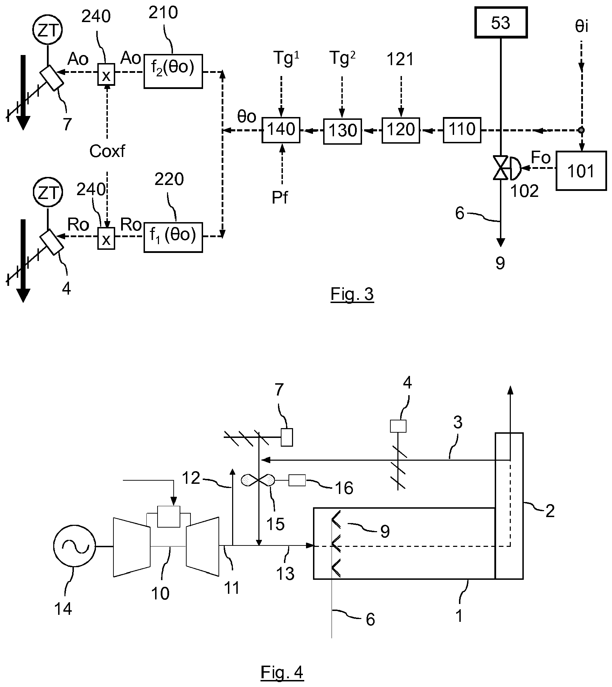

It will be appreciated that, whereas hereabove and in figures 3 and 6, the open-loop process has been described as comprising one or more successive controllers/corrector/operator bias, the entire open-loop can be executed in a single processing unit (PU), in particular by means of a software program.

The present invention is based on a new control logic in the field of FAO of CUs.

In order to take maximum advantage of the existing parts of the CU and to achieve improved energy efficiency during FAO regardless of the steam demand which the HRSG must meet (within the operation limits of the CU), it is necessary to regulate the total gas flow through the HRSG, in particular by regulating the supply of fresh air to the HRSG and, where available and appropriate, by also regulating the supply of recycled flue gas to the HRSG.

As a rule, the best energy efficiency is obtained by maximizing the firing temperature (which implies lowering the stream of combustion gases inside the HRSG) and, where available, by maximizing the recycled flue gas to fresh air ratio, while maintaining stable and efficient combustion of the fuel by means of the burner assembly and while respecting the physical and regulatory limitations of the installation. Examples of such limitations are: CO emissions, NOx emissions, maximum superheater-tubes temperature, maximum firing temperature, minimum stack temperature, minimum HRSG pressure, etc.

The fuel supply and the corresponding amount of combustion oxygen to be fed to HRSG are directly linked to the steam demand which the HRSG must meet.

A larger degree of adjustability is available during FAO for the following parameters of the HRSG:
- the fresh-air supply to the HRSG (provided the air supply does not descend below the threshold necessary for the combustion of the fuel),
- the supply of recycled flue gas to the HRSG (if a flue gas recycle is available), and
- the temperature to which the fresh air is preheated (if an air preheater is available).

The overall fresh-air supply can, for example, be adjusted by:
- adjusting the opening of an air damper and/or
- adjusting the speed of a variable-speed drive fan used for circulating the fresh air.

The supply of recycled flue gas can, for example, be adjusted by:
- adjusting the opening of a recirculation damper and/or
- adjusting the speed of a variable-speed drive fan incorporated in the flue gas recycle.

The temperature of the fresh air supplied to the HRSG can, for example, be adjusted by adjusting the flow of a heat source, and in particular a heat transfer fluid, to the air preheater.

For a given steam demand during FAO and the corresponding fuel supply to the HRSG, the energy efficiency of the HRSG can be optimized by adjusting the fresh air supply to the HRSG and optionally also one or both of the other abovementioned adjustable parameters, for example by associating a certain position of the fresh-air damper(s), of the flue-gas recirculation damper and/or the speed of the one or more variable-speed drive fans if such fans with variable speed are installed.

In accordance with the present invention, the used adjustable parameter or parameters is/are regulated in function of an output signal Θo which has been generated by open-loop processing of a signal Θ starting from an input signal Θi which reflects the instantaneous steam demand by one or more steam-consuming installations downstream of the HRSG.

Figure 1 shows a CU in which the fresh-air supply and the supply of recycled flue gas 3 to the HRSG 1 can be controlled respectively by means of a fresh-air damper 7 and a flue-gas recirculation damper 4. In this case, the adjustable parameters are the opening of the air damper 7 and the opening of the flue-gas recirculation damper 4.

Figure 4 shows a CU in which the fresh-air supply and the supply of recycled flue gas to the HRSG can be controlled by a combination of a fresh-air damper 7, a flue-gas recirculation damper 4 and a variable-speed drive fan 15.

In this case, the adjustable parameters are the opening of the air damper 7, the opening of the flue-gas recirculation damper 4 and the speed of the fan 15.

As illustrated in figures 1 to 3, respectively 4 to 6, an input signal Θi is received. Input signal Θi reflects the instantaneous steam demand of a downstream steam-consuming installation. The instantaneous steam demand corresponds to a thermal-energy requirement of the HRSG 1 which in FAO operates as an autonomous boiler and does not receive thermal energy in the form of gas turbine exhaust gas 11.

First controller 101 processes the input signal Θi into a fuel-demand signal Fo and the opening of fuel-supply valve 102 is regulated accordingly so as to generate a supply of fuel 6 from fuel source 53 to the burner assembly 9 which is sufficient to enable the HRSG 1 to meet the instantaneous steam demand of the downstream installation.

Input signal Θi is also sent to an open-loop process in which a signal Θ is processed from the input signal Θi to an output signal Θo. As a first step of the open-loop process, noise is removed from input signal Θi in damper 110.

As illustrated in figure 6, controller 101, which generates the fuel-demand signal Fo may alternatively be located downstream of damper 110. In other words, first controller 101 may generate fuel-demand signal Θi, starting from the damped input signal rather than from the raw (undamped) input signal Θi as illustrated in figure 3.

Damping of the input signal Θi is typically achieved by means of a dynamic filter and provides added stability to the open-loop process and to the value(s) of the adjustable parameter(s) based on the open-loop output signal Θo.

Second controller 120 enables an operator bias to be applied to signal Θ generated by damper 110 in response to a bias signal 121 from the operator (which may be an automated operator, not shown), for example in order to allow continued safe operation or safe shutdown following an unforeseen incident. Although second controller 120 is shown immediately following damper 110, second controller 120 may also be located at other locations in the open-loop process between reception of the input signal Θi and the output of output signal Θo.

Third controller 130 receives a gas temperature Tg², referred to as "second temperature", which is determined by a temperature measuring system (not shown) in the HRSG 1. Such a temperature measuring system may for example comprise one or preferably more than one temperature sensor located between the burner assembly 9 and the heat exchange assembly (not shown) of the HRSG 1 in which the steam is generated and brought to the required temperature and pressure. When the temperature measuring system comprises multiple temperature sensors, second temperature Tg² is preferably the average value of the temperatures detected by the different sensors. When the determined second temperature Tg² differs from a predetermined optimum temperature Topt (or falls outside a corresponding predetermined optimum temperature range), signal Θ generated by second controller 120 is corrected so as to reduce the difference between the second gas temperature Tg² and the optimum temperature Topt (or the optimum temperature range). The correction of signal Θ is typically on a limited scale. For example, the correction may be restricted to not more than one tenth of the difference between the values of signal Θ corresponding to respectively the maximum and the minimum steam demand which the HRSG may have to meet during FAO. Third controller 130 provides fine tuning of signal Θ and thus also of the adjustable parameters. The optimum temperature Topt may be constant or may depend on the steam demand which the HRSG 1 has to meet, for example so as to reduce the firing temperature in the HRSG 1 at higher steam demands.

One or more override controllers ensure that one or more critical process parameters remain at all times within acceptable limits. Examples of such critical process parameters can be the pressure and the temperature within the HRSG, in particular Pf and a further gas temperature Tg¹.

In the illustrated embodiments, a combined pressure and temperature override controller 140 is used. The override controller 140 ensures that the firing temperature in the HRSG does not exceed the upper safety limit Tmax, which typically falls within the range of 750°C to 900°C. Thereto, the temperature measurement system determines said further gas temperature Tg¹, referred to as "first temperature". When the temperature measuring system comprises only one temperature sensor, Tg¹ = Tg².

When the temperature measurement system comprises multiple temperature sensors, first temperature Tg¹ is preferably the highest of the temperatures detected by the different sensors, so that Tg¹ may be different from Tg². If the first detected gas temperature Tg¹ in the HRSG 1 exceeds the maximum allowable temperature Tmax, the override controller 140 increases signal Θ generated by third controller 130. As will become apparent hereafter, such an increase in signal Θ leads to an increase in the fresh air supply and optionally also in the supply 3 of recycled flue gas to the HRSG 1 and a drop in the firing temperature in the HRSG1. Similarly, the override controller 140 increases signal Θ when the pressure Pf (also known as boiler duct pressure) in the HRSG 1 drops to below a lower safety limit Pmin. A sufficient boiler duct pressure Pf is a key criterion for the safe operation of the burner assembly 9. Pmin typically falls in the range [3 mbar, 5mbar].

Override controllers 140 usefully operate as a closed-loop control.

Additional critical parameters may be included in the override step of controller 140, such as, for example, the maximum steam temperature (for safety reasons) or maximum pollutant levels in the flue gas (which are often subject to legal restrictions). The desirability of including additional override parameters is decided on a case-by-case basis.

At the end of the open-loop process, an output signal Θo is obtained. In the illustrated embodiments output signal Θo is obtained as the output value of override controller 140.

One or more control parameters for the FAO of the HRSG are obtained as a predetermined function of the obtained output signal Θo. This includes at least the air-demand signal Ao, with Ao = f1(Θo) which is used to regulate the supply of fresh air to the HRSG 1. In the illustrated embodiments Ao is determined as f1(Θo) by means of calculator 210.

In the illustrated embodiments, the control parameters also include a flue-gas-recycle signal Ro, with Ro = f2(Θo) which is used to regulate the supply 3 of recycled flue gas to the HRSG 1. In the illustrated embodiments, Ro is determined as f2(Θo) by means of calculator 220.

According to a preferred embodiment, predetermined functions f1 and f2 are specifically adapted to the HRSG 1 of the CU to which the method according to the invention is applied. Thereto, functions f1 and f2 are experimentally determined in real-site testing, typically before the commissioning of the HRSG, by experimentally determining, for a range of steam generation levels and the corresponding output signal values Θo, the optimum combination of control parameters (Ao, Ro, ...) or only the optimum value of the air supply and thus of the air-demand signal Ao when only the fresh-air supply to the HRSG is used as a control parameter for FAO.

The optimum control parameter or combination of control parameters is determined in function of energy efficiency and taking into account any boundary condition that may apply (pressure, temperature, emissions, etc.).

The results of said optimization experiments are then extrapolated into the predetermined functions: f1 and f2 in the illustrated embodiments. These functions can, for example, take the form of mathematical formulas or graphs giving respectively an optimum Ao and Ro value for each output signal Θo value within the range of [Θmin, Θmax].

Using respectively the Ao and Ro values corresponding to the output signal Θo of the open-loop process obtained on the basis of the received input signal Θi which reflects the instantaneous steam demand of the steam-consuming installation(s), the supply of fresh air and of recycled flue gas to the HRSG 1 is regulated respectively by means of fresh-air damper 7 (on the basis of Ao) and by means of flue-gas recirculation damper 4 (on the basis of Ro).

In the embodiment illustrated in figures 4 to 6, the total combined supply of fresh air and recycled flue gas is further regulated by means of variable-drive fan 15. A further control parameter Xo for the FAO of the HRSG, corresponding to the total supply of fresh air and recycled flue gas to the HRSG1 during FAO is obtained as a further predetermined function fx of the obtained open-loop output signal Θo. Xo = fx(Θo) is naturally correlated with the two other process control parameters Ao and Fo and is obtained by means of calculator 230. The speed of variable-speed drive 16 is then regulated in function of the value of Xo.

It will be appreciated that, even though in figures 3 and 6, the calculators 210, 220, 230 are shown as separate blocks, they can easily be incorporated in a single control unit, in particular in a control unit which also incorporates the step or steps of the open-loop process.

A further control parameter optimization is included in the embodiments illustrated in figures 3 and 6 downstream of calculators 210 and 220.

Thereto, the HRSG is equipped with an oxygen sensor (not shown) which detects the oxygen content Coxf of the flue gas leaving the HRSG 1 (which oxygen sensor may, for example be located in the main stack 2).

During the real-site tests used to determine the functions f1, f2, ..., the oxygen concentration during optimum FAO of the HRSG at different steam demand values was also recorded. It has indeed been observed that changes in extraneous factors, such as the temperature of the ambient air used as fresh air for FAO are reflected in the oxygen concentration of the flue gas.

Correctors 240 compare the detected oxygen concentration Coxf with the recorded optimum oxygen concentration Cset corresponding to the determined Θo value. When Coxf is higher than a predetermined narrow range around said Cset value, correctors 240 adjust the values of Ao and Ro and thus also the positions of the dampers 4 and 7 so as to decrease the ratio between supplied air and the supplied recycled flue gas 3. When Coxf is lower than said predetermined narrow range around the Cset value, correctors 240 adjust the values of Ro and of Ao and thus also the positions of the dampers 4 and 7 so as to increase the ratio (fresh air to recirculation ratio) between supplied air and the supplied recycled flue gas 3.

The values of Ao and Ro and the positions of dampers 4 and 7 are advantageously adjusted by correctors 240 without any impact on the total supply of fresh air and recycled flue gas 3 to the HRSG 1 as determined by means of predetermined functions f1 and f2 on the basis of Θo.

### Legend figures 1 to 6

- 1: Heat recovery steam generator (HRSG)
- 2: Main stack
- 3: Flue gas recycle stream
- 4: Flue gas recirculation damper
- 5: Fixed speed flue gas recirculation Fan
- 6: Natural gas to duct burner (burner assembly)
- 7: Fresh air damper
- 8: Fixed speed fresh air fan
- 9: Duct burner (burner assembly)
- 10: Gas turbine (GT)
- 11: Gas turbine exhaust gas stream
- 12: By-pass stack
- 13: Combustion oxidant to the HRSG 1
- 14: Electricity generator associated with o the gas turbine
- 15: Variable speed combustion air/recycled flue gas mixture fan
- 16: Variable speed drive (VSD)
- 50: Open-loop process block
- 53: Fuel source
- 101: First controller
- 102: Fuel supply valve
- 110: Damper
- 120: Second controller
- 121: Bias signal
- 130: Third controller
- 140: Override controller
- 210, 220, 230: Calculator
- 240: Correctors

## Claims

1. Method of controlling a fuel supply and an air supply to a fresh-air-operated heat recovery steam generator (1) of a Cogeneration Unit in order to meet an instantaneous steam demand from one or more downstream steam-consuming installations during fresh air operation during which the fuel is combusted with the air by means of a burner assembly in the heat recovery steam generator (1), thereby generating heat which is used to generate steam in a heat exchange assembly of the heat recovery steam generator (1) downstream of the burner assembly, the method comprising the steps of:
a. receiving an input signal Θi corresponding to the instantaneous steam-demand;
b. generating a fuel-demand signal Fo as a function of the input signal Θi and
c. regulating the fuel supply to the heat recovery steam generator (1) in accordance with said fuel-demand signal Fo;
**characterized in that** the method further comprises the step of:
d. processing a signal Θ from the input signal Θi to an output signal Θo in an open-loop process;
e. generating an air-demand signal Ao as a function of the output signal Θo; and
f. regulating the air supply to the heat recovery steam generator (1) in accordance with said air-demand signal Ao;
whereby Ao = f1(Θo), f1 being a first predetermined function.

2. Method according to claim 1, whereby the first predetermined function f1 has been obtained by experimentally determining an optimum value of the air-demand signal Ao at different levels of steam supply by the heat recovery steam generator (1) during fresh air operation.

3. Method according to any one of claims 1 and 2, whereby the open-loop process of step d comprises an initial substep of damping the input signal Θi by means of a dynamic filter (110).

4. Method according to any one of claims 1 to 3, whereby the heat recovery steam generator (1) comprises a pressure sensor which detects a pressure Pf in the heat recovery steam generator (1) upstream of the burner assembly, whereby the detected pressure Pf is compared with a predetermined minimum pressure Pmin and whereby the open-loop process of step d comprises a final substep of increasing the signal Θ by means of a PID controller (140) if Pf < Pmin.

5. Method according to any one of claims 1 to 3, whereby the heat recovery steam generator (1) comprises a temperature measuring system which determines a first gas temperature Tg¹ between the burner assembly and the heat exchange assembly, whereby the determined first temperature Tg¹ is compared with a predetermined maximum temperature Tmax and whereby the open-loop process of step d comprises a final substep of increasing the signal Θ by means of a PID controller (140) if Tg¹ > Tmax.

6. Method according to any one of claims 1 to 3, whereby the heat recovery steam generator (1) comprises a temperature measuring system which determines a first gas temperature Tg¹ in the heat recovery steam generator (1) between the burner assembly and the heat exchange assembly and a pressure sensor which detects a pressure Pf upstream of the burner assembly, whereby the determined first temperature Tg¹ is compared with a predetermined maximum temperature Tmax and the detected pressure Pf is compared with a predetermined minimum pressure Pmin and whereby the open-loop process of step d comprises a final substep of increasing the signal Θ by means of a PID controller (140) if Tg¹ > Tmax and/or if Pf < Pmin.

7. Method according to any one of claims 1 to 4, whereby the heat recovery steam generator (1) comprises a temperature measuring system which determines a second gas temperature Tg² in the heat recovery steam generator (1) between the burner assembly and the heat exchange assembly and whereby the determined second temperature Tg² is compared with a predetermined optimum temperature Topt and whereby the open-loop process of step d comprises a substep of increasing the signal Θ when Tg² > Topt and/or of decreasing the signal Θ when Tg² < Topt, preferably a substep of increasing the signal Θ when Tg² > Topt and of decreasing the signal Θ when Tg² < Topt.

8. Method according to any one of claims 5 and 6, whereby the temperature measuring system which determines the first gas temperature Tg¹ also determines a second gas temperature Tg² between the burner assembly and the heat exchange assembly, and whereby second temperature Tg² is compared with a predetermined optimum temperature Topt and whereby the open-loop process of step d comprises a step of increasing the signal Θ when Tg² > Topt and/or of decreasing the signal Θ when Tg² < Topt before the final substep of the open-loop process of step d, preferably a substep of increasing the signal Θ when Tg² > Topt and of decreasing the signal Θ when Tg² < Topt before the final substep of the open-loop process of step d.

9. Method according to claim 8, whereby the temperature measuring system comprises multiple temperature sensors between the burner assembly and the heat exchange assembly, whereby the first temperature Tg¹ is the highest of the temperatures detected by the temperature sensors and whereby the second temperature Tg² is the average value of the temperature detected by the temperature sensors.

10. Method according to any one of the previous claims, whereby the heat recovery steam generator (1) further comprises a flue gas recycle.

11. Method according to claim 10, whereby the method further comprises the steps of:
g. generating a flue-gas-recycle signal Ro according to a second predetermined function f2 of the output signal Θo, Ro = f2(Θo), and
h. regulating the supply of recycled flue gas (3) to the heat recovery steam generator (1) in accordance with said flue-gas-recycle signal Ro.

12. Method according to claim 11, whereby the heat recovery steam generator (1) further comprises an oxygen sensor which detects the oxygen concentration Coxf in the flue gas leaving the heat recovery steam generator (1), whereby the method further includes the step of:
i. comparing the detected oxygen concentration Coxf with a flue gas oxygen target value Cset, and
j. adjusting the air-demand signal Ao and/or the flue-gas-recycle signal Ro, upstream of the respective steps f and h of regulating the air supply and the supply of recycled flue gas (3), so as to increase the ratio between the supplied air and the recycled flue gas (3) when Coxf < Cset and so as to decrease the ratio between supplied air and recycled flue gas (3) when Coxf > Cset.

13. Method according to claim 12, whereby the adjustment of the air-demand signal Ao and/or of the flue-gas-recycle signal Ro in step j is conducted so that the total amount of air and of recycled flue gas (3) to the heat recovery steam generator (1), expressed in Nm³/h, remains substantially constant.

14. Method according to claim 12 or 13 whereby the step of adjusting the air-demand signal Ao and/or the flue-gas-recycle signal Ro in step j is conducted in a closed-loop process.

15. Method according to any one of the preceding claims, whereby the HRSG comprises a fresh air preheater and whereby the temperature to which the air is preheated in the fresh air preheater before being supplied to the HRSG is regulated in accordance with an air temperature signal Ta, whereby Ta = f3(Θo), f3 being a third predetermined function.

## Patentansprüche

1. Verfahren zur Steuerung einer Brennstoffversorgung und einer Luftversorgung eines frischluftbetriebenen Wärmerückgewinnungsdampfgenerators (1) einer Kraft-Wärme-Kopplungseinheit, um einen momentanen Dampfbedarf aus einer oder mehreren stromabwärtigen dampfverbrauchenden Anlagen während des Frischluftbetriebs zu decken, bei dem der Brennstoff mit der Luft mittels einer Brenneranordnung im Wärmerückgewinnungsdampfgenerator (1) verbrannt wird, wodurch Wärme erzeugt wird, die zur Erzeugung von Dampf in einer Wärmeaustauschanordnung des Wärmerückgewinnungsdampfgenerators (1) stromabwärts der Brenneranordnung verwendet wird, wobei das Verfahren die folgenden Schritte umfasst:
a. Empfangen eines Eingangssignals Θi entsprechend dem momentanen Dampfbedarf;
b. Erzeugen eines Brennstoffbedarf-Signals Fo in Abhängigkeit vom Eingangssignal Θi und
c. Regeln der Brennstoffversorgung des Wärmerückgewinnungsdampfgenerators (1) gemäß dem Brennstoffbedarf-Signal Fo;
**dadurch gekennzeichnet, dass** das Verfahren weiter den folgenden Schritt umfasst:
d. Verarbeiten eines Signals Θ aus dem Eingangssignal Θi zu einem Ausgangssignal Θo in einem Prozess mit offener Schleife;
e. Erzeugen eines Luftbedarfssignals Ao in Abhängigkeit vom Ausgangssignal Θo; und
f. Regeln der Luftversorgung des Wärmerückgewinnungsdampfgenerators (1) gemäß dem Luftbedarfssignal Ao;
wobei Ao = f1(Θo) ist, wobei f1 eine erste vorbestimmte Funktion ist.

2. Verfahren nach Anspruch 1, wobei die erste vorbestimmte Funktion f1 durch experimentelles Bestimmen eines optimalen Wertes des Luftbedarfssignals Ao bei verschiedenen Dampfversorgungsstufen durch den Wärmerückgewinnungsdampfgenerator (1) während des Frischluftbetriebs erhalten wurde.

3. Verfahren nach einem der Ansprüche 1 und 2, wobei der Prozess mit offener Schleife von Schritt d einen ersten Teilschritt der Dämpfung des Eingangssignals Θi mittels eines dynamischen Filters (110) umfasst.

4. Verfahren nach einem der Ansprüche 1 bis 3, wobei der Wärmerückgewinnungsdampfgenerator (1) einen Drucksensor umfasst, der einen Druck Pf im Wärmerückgewinnungsdampfgenerator (1) stromaufwärts der Brenneranordnung erfasst, wobei der erfasste Druck Pf mit einem vorbestimmten Mindestdruck Pmin verglichen wird und wobei der Prozess mit offener Schleife von Schritt d einen letzten Teilschritt der Erhöhung des Signals Θ mittels eines PID-Reglers (140) umfasst, wenn Pf < Pmin.

5. Verfahren nach einem der Ansprüche 1 bis 3, wobei der Wärmerückgewinnungsdampfgenerator (1) ein Temperaturmesssystem umfasst, das eine erste Gastemperatur Tg¹ zwischen der Brenneranordnung und der Wärmeaustauschanordnung bestimmt, wobei die bestimmte erste Temperatur Tg¹ mit einer vorbestimmten Höchsttemperatur Tmax verglichen wird und wobei der Prozess mit offener Schleife von Schritt d einen letzten Teilschritt der Erhöhung des Signals Θ mittels eines PID-Reglers (140) umfasst, wenn Tg¹ > Tmax.

6. Verfahren nach einem der Ansprüche 1 bis 3, wobei der Wärmerückgewinnungsdampfgenerator (1) ein Temperaturmesssystem umfasst, das eine erste Gastemperatur Tg¹ im Wärmerückgewinnungsdampfgenerator (1) zwischen der Brenneranordnung und der Wärmeaustauschanordnung bestimmt, und einen Drucksensor, der einen Druck Pf stromaufwärts der Brenneranordnung erfasst, wobei die bestimmte erste Temperatur Tg¹ mit einer vorbestimmten Höchsttemperatur Tmax und der erfasste Druck Pf mit einem vorbestimmten Mindestdruck Pmin verglichen werden, und wobei der Prozess mit offener Schleife von Schritt d einen letzten Teilschritt der Erhöhung des Signals Θ mittels eines PID-Reglers (140) umfasst, wenn Tg¹ > Tmax und/oder wenn Pf < Pmin.

7. Verfahren nach einem der Ansprüche 1 bis 4, wobei der Wärmerückgewinnungsdampfgenerator (1) ein Temperaturmesssystem umfasst, das eine zweite Gastemperatur Tg² im Wärmerückgewinnungsdampfgenerator (1) zwischen der Brenneranordnung und der Wärmeaustauschanordnung bestimmt und wobei die bestimmte zweite Temperatur Tg² mit einer vorbestimmten optimalen Temperatur Topt verglichen wird und wobei Prozess mit offener Schleife von Schritt d einen Teilschritt der Erhöhung des Signals Θ umfasst, wenn Tg² > Topt und/oder der Verringerung des Signals Θ, wenn Tg² < Topt, vorzugsweise einen Teilschritt der Erhöhung des Signals Θ, wenn Tg² > Topt und der Verringerung des Signals Θ, wenn Tg² < Topt.

8. Verfahren nach einem der Ansprüche 5 und 6, wobei das Temperaturmesssystem, das die erste Gastemperatur Tg¹ bestimmt auch eine zweite Gastemperatur Tg² zwischen der Brenneranordnung und der Wärmeaustauschanordnung bestimmt, und wobei die zweite Temperatur Tg² mit einer vorbestimmten optimalen Temperatur Topt verglichen wird und wobei der Prozess mit offener Schleife von Schritt d einen Schritt der Erhöhung des Signals Θ umfasst, wenn Tg² > Topt und/oder der Verringerung des Signals Θ, wenn Tg² < Topt vor dem letzten Teilschritt des Prozesses mit offener Schleife von Schritt d, vorzugsweise einen Teilschritt der Erhöhung des Signals Θ, wennTg² > Topt und der Verringerung des Signals Θ, wenn Tg² < Topt vor dem letzten Teilschritt des Prozesses mit offener Schleife von Schritt d.

9. Verfahren nach Anspruch 8, wobei das Temperaturmesssystem mehrere Temperatursensoren zwischen der Brenneranordnung und der Wärmeaustauschanordnung umfasst, wobei die erste Temperatur Tg¹ die höchste der von den Temperatursensoren erfassten Temperaturen ist und wobei die zweite Temperatur Tg² der Durchschnittswert der von den Temperatursensoren erfassten Temperatur ist.

10. Verfahren nach einem der vorstehenden Ansprüche, wobei der Wärmerückgewinnungsdampfgenerator (1) weiter ein Rauchgas-Recycling umfasst.

11. Verfahren nach Anspruch 10, wobei das Verfahren weiter die folgenden Schritte umfasst:
g. Erzeugen eines Rauchgas-Recyclingsignals Ro gemäß einer zweiten vorbestimmten Funktion f2 des Ausgangssignals Θo, Ro = f2(Θo) und
h. Regeln der Versorgung des Wärmerückgewinnungsdampfgenerators (1) mit recyceltem Rauchgas (3) gemäß dem Rauchgas-Recyclingsignal Ro.

12. Verfahren nach Anspruch 11, wobei der Wärmerückgewinnungsdampfgenerator (1) weiter einen Sauerstoffsensor umfasst, der die Sauerstoffkonzentration Coxf im Rauchgas, das den Wärmerückgewinnungsdampfgenerator (1) verlässt, erfasst, wobei das Verfahren weiter den folgenden Schritt einschließt:
i. Vergleichen der erfassten Sauerstoffkonzentration Coxf mit einem Rauchgas-Sauerstoff-Sollwert Cset, und
j. Einstellen des Luftbedarfssignals Ao und/oder des Rauchgas-Recyclingsignals Ro stromaufwärts der jeweiligen Schritte f und h zum Regeln der Luftversorgung und der Versorgung mit recyceltem Rauchgas (3), um das Verhältnis zwischen der versorgten Luft und dem versorgten Rauchgas (3) zu erhöhen, wenn Coxf < Cset, und um das Verhältnis zwischen versorgter Luft und recyceltem Rauchgas (3) zu verringern, wenn Coxf > Cset.

13. Verfahren nach Anspruch 12, wobei die Einstellung des Luftbedarfssignals Ao und/oder des Rauchgas-Recyclingsignals Ro in Schritt j so durchgeführt wird, dass die Gesamtmenge an Luft und an recyceltem Rauchgas (3) zum Wärmerückgewinnungsdampfgenerator (1), ausgedrückt in Nm³/h, im Wesentlichen konstant bleibt.

14. Verfahren nach Anspruch 12 oder 13, wobei der Schritt des Einstellens des Luftbedarfssignals Ao und/oder des Rauchgas-Recyclingsignals Ro in Schritt j in einem Prozess mit geschlossener Schleife durchgeführt wird.

15. Verfahren nach einem der vorstehenden Ansprüche, wobei der Wärmerückgewinnungsdampfgenerator (HRSG) einen Frischluftvorwärmer umfasst und wobei die Temperatur, auf die die Luft im Frischluftvorwärmer vorgewärmt wird, bevor sie den Wärmerückgewinnungsdampfgenerator (HRSG) versorgt, gemäß einem Lufttemperatursignal Ta geregelt wird, wobei Ta = f3(Θo), wobei f3 eine dritte vorbestimmte Funktion ist.

## Revendications

1. Procédé de commande d'une alimentation en carburant et d'une alimentation en air pour un générateur de vapeur à récupération de chaleur (1) fonctionnant à l'air frais d'une Unité de Cogénération afin de satisfaire une demande de vapeur instantanée provenant d'une ou plusieurs installations aval consommatrices de vapeur pendant un fonctionnement à l'air frais pendant lequel le carburant est brûlé avec l'air au moyen d'un ensemble brûleur dans le générateur de vapeur à récupération de chaleur (1), produisant de ce fait de la chaleur qui est utilisée pour produire de la vapeur dans un ensemble échangeur de chaleur du générateur de vapeur à récupération de chaleur (1) en aval de l'ensemble brûleur, le procédé comprenant les étapes de :
a. réception d'un signal d'entrée Θi correspondant à la demande de vapeur instantanée ;
b. production d'un signal de demande de carburant Fo comme une fonction du signal d'entrée Θi et
c. régulation de l'alimentation en carburant vers le générateur de vapeur à récupération de chaleur (1) selon ledit signal de demande de carburant Fo ;
**caractérisé en ce que** le procédé comprend en outre l'étape de :
d. traitement d'un signal Θ provenant du signal d'entrée Θi vers un signal de sortie Θo dans un processus en boucle ouverte ;
e. production d'un signal de demande d'air Ao comme une fonction du signal de sortie Θo ; et
f. régulation de l'alimentation en air vers le générateur de vapeur à récupération de chaleur (1) selon ledit signal de demande d'air Ao ;
dans lequel Ao = f1(Θo), f1 étant une première fonction prédéterminée.

2. Procédé selon la revendication 1, dans lequel la première fonction prédéterminée f1 a été obtenue en déterminant de façon expérimentale une valeur optimale du signal de demande d'air Ao à différents niveaux d'alimentation en vapeur par le générateur de vapeur à récupération de chaleur (1) pendant un fonctionnement à l'air frais.

3. Procédé selon l'une quelconque des revendications 1 et 2, dans lequel le processus en boucle ouverte de l'étape d comprend une sous-étape initiale d'amortissement du signal d'entrée Θi au moyen d'un filtre dynamique (110).

4. Procédé selon l'une quelconque des revendications 1 à 3, dans lequel le générateur de vapeur à récupération de chaleur (1) comprend un capteur de pression qui détecte une pression Pf dans le générateur de vapeur à récupération de chaleur (1) en amont de l'ensemble brûleur, dans lequel la pression détectée Pf est comparée à une pression minimale prédéterminée Pmin et dans lequel le processus en boucle ouverte de l'étape d comprend une sous-étape finale d'augmentation du signal Θ au moyen d'une unité de commande PID (140) si Pf < Pmin.

5. Procédé selon l'une quelconque des revendications 1 à 3, dans lequel le générateur de vapeur à récupération de chaleur (1) comprend un système de mesure de température qui détermine une première température de gaz Tg¹ entre l'ensemble brûleur et l'ensemble échangeur de chaleur, dans lequel la première température déterminée Tg¹ est comparée à une température maximale prédéterminée Tmax et dans lequel le processus en boucle ouverte de l'étape d comprend une sous-étape finale d'augmentation du signal Θ au moyen d'une unité de commande PID (140) si Tg¹ > Tmax.

6. Procédé selon l'une quelconque des revendications 1 à 3, dans lequel le générateur de vapeur à récupération de chaleur (1) comprend un système de mesure de température qui détermine une première température de gaz Tg¹ dans le générateur de vapeur à récupération de chaleur (1) entre l'ensemble brûleur et l'ensemble échangeur de chaleur et un capteur de pression qui détecte une pression Pf en amont de l'ensemble brûleur, dans lequel la première température déterminée Tg¹ est comparée à une température maximale prédéterminée Tmax et la pression détectée Pf est comparée à une pression minimale prédéterminée Pmin et dans lequel le processus en boucle ouverte de l'étape d comprend une sous-étape finale d'augmentation du signal Θ au moyen d'une unité de commande PID (140) si Tg¹ > Tmax et/ou si Pf < Pmin.

7. Procédé selon l'une quelconque des revendications 1 à 4, dans lequel le générateur de vapeur à récupération de chaleur (1) comprend un système de mesure de température qui détermine une seconde température de gaz Tg² dans le générateur de vapeur à récupération de chaleur (1) entre l'ensemble brûleur et l'ensemble échangeur de chaleur et dans lequel la seconde température déterminée Tg² est comparée à une température optimale prédéterminée Topt et dans lequel le processus en boucle ouverte de l'étape d comprend une sous-étape d'augmentation du signal Θ quand Tg² > Topt et/ou de diminution du signal Θ quand Tg² < Topt, de préférence une sous-étape d'augmentation du signal Θ quand Tg² > Topt et de diminution du signal Θ quand Tg² < Topt.

8. Procédé selon l'une quelconque des revendications 5 et 6, dans lequel le système de mesure de température qui détermine la première température de gaz Tg¹ détermine également une seconde température de gaz Tg² entre l'ensemble brûleur et l'ensemble échangeur de chaleur et dans lequel la seconde température Tg² est comparée à une température optimale prédéterminée Topt et dans lequel le processus en boucle ouverte de l'étape d comprend une étape d'augmentation du signal Θ quand Tg² > Topt et/ou de diminution du signal Θ quand Tg² < Topt avant la sous-étape finale du processus en boucle ouverte de l'étape d, de préférence une sous-étape d'augmentation du signal Θ quand Tg² > Topt et de diminution du signal Θ quand Tg² < Topt avant la sous-étape finale du processus en boucle ouverte de l'étape d.

9. Procédé selon la revendication 8, dans lequel le système de mesure de température comprend de multiples capteurs de température entre l'ensemble brûleur et l'ensemble échangeur de chaleur, dans lequel la première température Tg¹ est la plus haute des températures détectées par les capteurs de température et dans lequel la seconde température Tg² est la valeur moyenne de la température détectée par les capteurs de température.

10. Procédé selon n'importe laquelle des revendications précédentes, dans lequel le générateur de vapeur à récupération de chaleur (1) comprend en outre un recyclage des fumées.

11. Procédé selon la revendication 10, dans lequel le procédé comprend en outre les étapes de :
g. production d'un signal de recyclage des fumées Ro selon une deuxième fonction prédéterminée f2 du signal de sortie Θo, Ro = f2(Θo), et
h. régulation de l'alimentation en fumées recyclées (3) vers le générateur de vapeur à récupération de chaleur (1) selon ledit signal de recyclage des fumées Ro.

12. Procédé selon la revendication 11, dans lequel le générateur de vapeur à récupération de chaleur (1) comprend en outre un capteur d'oxygène qui détecte la concentration en oxygène Coxf dans les fumées quittant le générateur de vapeur à récupération de chaleur (1), dans lequel le procédé inclut en outre l'étape de :
i. comparaison de la concentration en oxygène détectée Coxf à une valeur cible d'oxygène dans les fumées Cset, et
j. ajustement du signal de demande d'air Ao et/ou du signal de recyclage des fumées Ro, en amont des étapes respectives f et h de régulation de l'alimentation en air et de l'alimentation en fumées recyclées (3), afin d'augmenter le rapport entre l'air fourni et les fumées recyclées (3) quand Coxf < Cset et afin de diminuer le rapport entre l'air fourni et les fumées recyclées (3) quand Coxf > Cset.

13. Procédé selon la revendication 12, dans lequel l'ajustement du signal de demande d'air Ao et/ou du signal de recyclage des fumées Ro dans l'étape j est conduit dans lequel la quantité totale d'air et de fumées recyclées (3) vers le générateur de vapeur à récupération de chaleur (1), exprimée en Nm³/h, reste sensiblement constante.

14. Procédé selon la revendication 12 ou 13, dans lequel l'étape d'ajustement du signal de demande d'air Ao et/ou du signal de recyclage des fumées Ro dans l'étape j est conduite dans un processus en boucle fermée.

15. Procédé selon l'une quelconque des revendications précédentes, dans lequel le HRSG comprend un dispositif de préchauffage d'air frais et dans lequel la température à laquelle l'air est préchauffé dans le dispositif de préchauffage d'air frais avant d'être fourni au HRSG est régulée selon un signal de température d'air Ta, dans lequel Ta = f3(Θo), f3 étant une troisième fonction prédéterminée.
